# EUROPEAN PATENT APPLICATION

(11) **EP 4 427 964 A1**
(43) Date of publication of application: **11.09.2024**
(21) Application number: 22889244.4
(22) Date of filing: 31.10.2022
(51) Int. Cl.: B60K 15/077, B65D 90/52

(54) **FUEL TANK ANTI-SURGE PLATE, FUEL TANK AND VEHICLE**

(30) Priority: 03.11.2021 CN 202122676986 U
(71) Applicant: Beijing Chehejia Automobile Technology Co., Ltd., Beijing 101300 (CN)
(72) Inventor: NIU, Ruifeng, Beijing 101300 (CN)
(74) Representative: Maiwald GmbH
(86) International application number: PCT/CN2022/128771
(87) International publication number: WO 2023/078219

(57) **Abstract**

A fuel tank anti-surge plate, a fuel tank and a vehicle. The fuel tank anti-surge plate comprises a base plate (10), wherein a first anti-surge part (20) and a second anti-surge part (30) are arranged on the base plate (10); the first anti-surge part (20) comprises first anti-surge plates (21) and second anti-surge plates (22), and the first anti-surge plates (21) and the second anti-surge plates (22) are arranged in a crossed manner; the second anti-surge part (30) is arranged on one side of the first anti-surge part (20), and the second anti-surge part (30) comprises anti-surge protrusions (31); and the base plate (10) is further provided with a fixing part, and the fixing part fixes the base plate (10) in a fuel tank.

## Description

### CROSS-REFERENCE TO RELATED APPLICATION

This application is based on and claims priority to Chinese Patent Application No. 202122676986.2, filed on November 3, 2021, the contents of which are incorporated herein by reference in their entireties.

### FIELD

The present disclosure relates to the field of fuel tank anti-wave technologies, and more particularly to a fuel tank anti-wave plate, a fuel tank, and a vehicle.

### BACKGROUND

With the continuous improvement of vehicle manufacturing level, the research on the noise generated by vehicles in the process of driving has also been developed rapidly. In particular, traditional noises such as engines and tires are well controlled.

However, at present, the noise generated by sloshing of oil in a fuel tank of the vehicles has not been effectively controlled. When the vehicles are driving on a rough road or the vehicles accelerate or brake urgently, the oil in the fuel tank also slosh due to the shaking of the vehicles, and the oil hits an inner wall of the fuel tank and produces a noise, which seriously affects the passenger experience.

### SUMMARY

In order to solve the above technical problems or at least partially solve the above technical problems, the present disclosure provides a fuel tank anti-wave plate, a fuel tank, and a vehicle.

The present disclosure provides a fuel tank anti-wave plate including a base plate. A first anti-wave part and a second anti-wave part are arranged on the base plate. The first anti-wave part includes a first anti-wave plate and a second anti-wave plate, and the first anti-wave plate and the second anti-wave plate are arranged in a crossed manner. The second anti-wave part is arranged on a side of the first anti-wave part, and the second anti-wave part includes an anti-wave protrusion. The base plate is further provided with a fixing part, and the fixing part fixes the base plate in a fuel tank.

In some embodiments, the first anti-wave plate and the second anti-wave plate are arranged perpendicular to each other, and the first anti-wave plate and the second anti-wave plate are perpendicular to the base plate.

In some embodiments, a plurality of first anti-wave plates and a plurality of second anti-wave plates are provided, the plurality of first anti-wave plate are parallel to each other, the plurality of second anti-wave plate are parallel to each other, and the plurality of first anti-wave plate and the plurality of second anti-wave plate cross to enclose a plurality of rectangular spaces.

In some embodiments, the base plate includes a first avoidance hole configured for oil on an upper side and a lower side of the base plate to communicate with each other, a plurality of first avoidance holes are provided, and a bottom of each rectangular space defines at least one first avoidance hole.

In some embodiments, the first anti-wave plate defines a second avoidance hole, a plurality of second avoidance holes are provided, and each rectangular space defines at least one second avoidance hole.

In some embodiments, the second anti-wave plate defines a U-shaped groove opening upwards, two sides of the U-shaped groove are respectively coupled to the first anti-wave plate, and a bottom of the U-shaped groove is coupled to the base plate.

In some embodiments, a reinforcing plate is further arranged on the base plate, and the reinforcing plate is arranged in parallel with the first anti-wave plate and penetrates the second anti-wave plate.

In some embodiments, a reinforcing plate is further arranged on the base plate, the reinforcing plate is arranged in parallel with the first anti-wave plate and penetrates the second anti-wave plate, and a height of the reinforcing plate is identical to a height of the U-shaped groove.

In some embodiments, a baffle plate is arranged at an edge of the first anti-wave part.

In some embodiments, the anti-wave protrusion is arranged on the upper side and/or the lower side of the base plate.

In some embodiments, the fixing part includes a fixing device including a fixing hole defined in the base plate, the base plate is provided with a recess recessed downwards, the fixing hole is defined in a bottom of the recess, an inner wall of the fuel tank is welded with a fixing column fitted with the fixing hole, and the fixing column is a threaded column passing through the fixing hole.

In some embodiments, the recess is recessed downwards, so that a gap is defined between the base plate and the inner wall of the fuel tank after the base plate is fixed to the inner wall of the fuel tank.

In some embodiments, the fixing part further includes a snapping device including a snap arranged on the base plate, and a snapping part fitted with the snap is arranged on the inner wall of the fuel tank.

The present disclosure further provides a fuel tank including a fuel tank anti-wave plate as described above, and the second anti-wave part is arranged close to an inner wall of the fuel tank.

The present disclosure further provides a vehicle including a fuel tank as described above.

In the fuel tank anti-wave plate provided in the present disclosure, the fixing part is arranged on the base plate such that the fuel tank anti-wave plate is stably fixed inside the fuel tank; the first anti-wave plate and the second anti-wave plate are provided, and the first anti-wave plate and the second anti-wave plate are arranged in the crossed manner, such that the first anti-wave plate and the second anti-wave plate may have a better anti-wave effect; the second anti-wave part is arranged on a side of the first anti-wave part and the anti-wave protrusion is arranged on the second anti-wave part, such that the sloshing of the oil in the fuel tank is further suppressed, and the sloshing of the oil in a corner area of the fuel tank may also be effectively suppressed, effectively suppressing the noise caused by the sloshing of the oil and improving the passenger experience.

### BRIEF DESCRIPTION OF THE DRAWINGS

The drawings herein are incorporated into the specification and form a part of the specification, show embodiments that comply with the present disclosure, and are used to explain the principles of the present disclosure together with the specification.

In order to more clearly explain the technical solution of embodiments of the present disclosure or the related art, the drawings required to be used in the description of embodiments or the related art will be briefly described below, and it is obvious that for those skilled in the art, other drawings may be obtained according to these drawings without creative labor.
FIG. 1 is a schematic diagram of a fuel tank anti-wave plate according to an embodiment of the present disclosure;
FIG. 2 is a top view of a fuel tank anti-wave plate according to an embodiment of the present disclosure; and
FIG. 3 is a side view of a fuel tank anti-wave plate according to an embodiment of the present disclosure.

In which, 10 base plate; 11 first avoidance hole; 12 reinforcing plate; 13 baffle plate; 20 first anti-wave part; 21 first anti-wave plate; 22 second anti-wave plate; 23 second avoidance hole; 24 U-shaped groove; 30 second anti-wave part; 31 anti-wave protrusion; 40 fixing device; 41 fixing hole; 42 recess; 43 fixing column.

### DETAILED DESCRIPTION

In order to more clearly understand the purpose, features and advantages of the present disclosure, solutions of the present disclosure will be further described below. It should be noted that the embodiments of the present disclosure and the features in the embodiments may be combined with each other without conflict.

In order to fully understand the present disclosure, many specific details are explained in the following description, but the present disclosure may also be implemented in other ways different from those described here; obviously, the embodiments in the description are only a part of embodiments of the present disclosure, not all of them.

In the description of the embodiment, the orientation or position relationship indicated by the terms "up", "down", "left", "right", "front", "rear", and the like, is based on the orientation or position relationship shown in the accompanying drawings, which is only for the convenience of describing the embodiments and simplifying the description, and does not indicate or imply that the referred device or element must have a specific orientation, and be constructed and operated in a specific orientation, so it cannot be understood as a limitation of the present invention.

A fuel tank anti-wave plate provided in the present disclosure is illustrated by way of example for application in a fuel tank of a vehicle. In practical use, it may also be arranged in the fuel tank of other mobile devices according to actual needs.

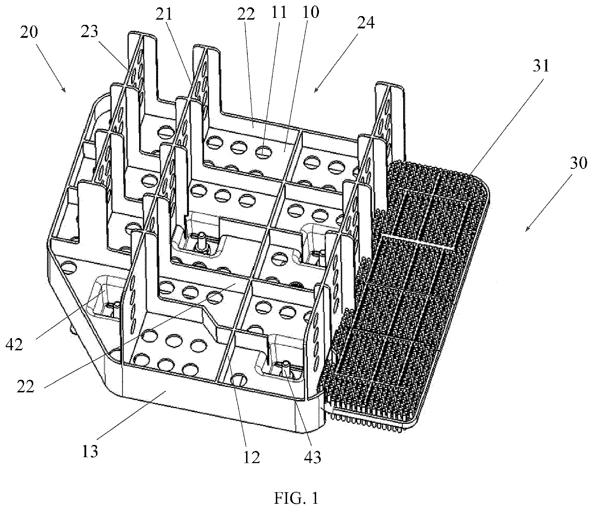

The fuel tank anti-wave plate in the present disclosure is configured to prevent noise from being generated by sloshing of the oil in the fuel tank due to the shaking of the vehicle during driving, which may affect the passenger experience. As shown in FIGS. 1 to 3, the fuel tank anti-wave plate includes a base plate 10, and the base plate 10 is arranged at a bottom of the fuel tank, and a specific shape and size of the base plate 10 may be set according to an actual shape and size of the fuel tank. A first anti-wave part 20 and a second anti-wave part 30 are arranged on the base plate 10. The first anti-wave part 20 is arranged on an upper side of the base plate 10 and includes a first anti-wave plate 21 and a second anti-wave plate 22. A bottom of the first anti-wave plate 21 and a bottom of the second anti-wave plate 22 are fixedly coupled to the base plate 10, and the first anti-wave plate 21 and the second anti-wave plate 22 are arranged in a crossed manner. A specific angle at which the first anti-wave plate 21 and the second anti-wave plate 22 are arranged in a crossed manner may be set according to actual needs. The second anti-wave part 30 is arranged on a side of the first anti-wave part 20, and the second anti-wave part 30 includes an anti-wave protrusion 31.

The fuel tank anti-wave plate further includes a fixing part that is configured to fix the fuel tank anti-wave base plate 10 on an inner wall of the fuel tank, and the fixing part is specifically arranged on the base plate 10.

In the fuel tank anti-wave plate of the present disclosure, the fixing part is arranged on the base plate 10, such that the fuel tank anti-wave plate is stably fixed inside the fuel tank; the first anti-wave plate 21 and the second anti-wave plate 22 are provided, and the first anti-wave plate 21 and the second anti-wave plate 22 are arranged in the crossed manner, such that the first anti-wave plate 21 and the second anti-wave plate 22 may have a better anti-wave effect; the second anti-wave part 30 is arranged on a side of the first anti-wave part 20 and the anti-wave protrusion 31 is arranged on the second anti-wave part 30, such that the sloshing of the oil in the fuel tank is further suppressed, and the sloshing of the oil in a corner area of the fuel tank may also be effectively suppressed, effectively suppressing the noise caused by the sloshing of the oil and improving the passenger experience.

In the embodiment, the fuel tank anti-wave plate is made of a plastic material and is made by injection molding. The use of plastic material not only makes the fuel tank anti-wave plate light in weight and does not increase the load on the vehicle, but also may realize the design of various complex structures and improve the freedom of design.

The base plate 10 defines a first avoidance hole 11 that is configured for the circulation of oil, so that the oil on the upper side of the base plate 10 and a lower side of the base plate 10 may communicate with each other. A plurality of first avoidance holes 11 are provided, and the plurality of first avoidance holes 11 are uniformly arranged on the base plate 10 located at the first anti-wave part 20. A size of the first avoidance hole 11 may be determined according to actual needs. Usually, the size of the first avoidance hole 11 should not be set too small, which is easy to obstruct the circulation of oil; and the size of the first avoidance hole 11 should not be set too large, which does not have a good anti-wave effect.

Specifically, the first anti-wave plate 21 and the second anti-wave plate 22 are arranged perpendicular to each other, and the first anti-wave plate 21 and the second anti-wave plate 22 are perpendicular to the base plate 10. A plurality of first anti-wave plates 21 and a plurality of second anti-wave plates 22 are arranged on the base plate 10. The plurality of first anti-wave plates 21 are arranged at intervals, and directions of arrangement are parallel to each other. The plurality of second anti-wave plates 22 are arranged at intervals, and directions of arrangement are parallel to each other. The plurality of first anti-wave plates 21 and the plurality of second anti-wave plates 22 cross each other to enclose a plurality of rectangular spaces and form an oil anti-wave zone. Bottoms of the rectangular spaces are the base plate 10, and side walls of the rectangular spaces are constituted by the first anti-wave plates 21 and the second anti-wave plates 22. The bottom of each rectangular space defines at least one first avoidance hole 11, so that the oil above and below the base plate 10 at a bottom of the oil anti-wave zone formed by each rectangular space may flow with each other, playing an effective anti-wave role.

The first anti-wave plate 21 has a certain height, and each part of the first anti-wave plate 21 has an identical height. The first anti-wave plate defines a second avoidance hole 23 configured for the circulation of oil. A plurality of second avoidance holes 23 are provided, and the plurality of second avoidance holes 23 are uniformly defined in the first anti-wave plate 21, thus ensuring that the oil in the fuel tank may circulate normally and avoiding the oil retention in the fuel tank. The first anti-wave plate 21 of each rectangular space includes at least one second avoidance hole 23, to ensure that the oil in individual rectangular spaces may flow with each other.

In the embodiment, each rectangular space includes the plurality of first avoidance holes 11 and the plurality of second avoidance holes 23, improving the mutual fluidity of the oil in the plurality of rectangular spaces and avoiding the oil retention in the fuel tank.

The second anti-wave plate 22 defines a U-shaped groove 24 opening upwards, and the U-shaped groove 24 is defined between two first anti-wave plates 21. Two sides of the U-shaped groove 24 are respectively coupled to the first anti-wave plate 21, and a bottom of the U-shaped groove 24 is coupled to the base plate 10. The arrangement of the U-shaped groove 24 allows further circulation of oil and prevents oil retention.

In some embodiments, a reinforcing plate 12 is further arranged on the base plate 10, the reinforcing plate 12 is arranged in parallel with the first anti-wave plate 21 and penetrates the second anti-wave plate 22, and a height of the reinforcing plate 12 is identical to a height of the U-shaped groove 24. The reinforcing plate 12 may strengthen the overall structural strength of the fuel tank anti-wave plate, so that the fuel tank anti-wave plate is not deformed and not damaged when the oil is sloshing.

In some embodiments, a baffle plate 13 is arranged at an edge of the first anti-wave part 20. The baffle plate 13 may make the fuel tank anti-wave plate fit more stable with the inner wall of the fuel tank, and may also strengthen the overall structural strength of the fuel tank anti-wave plate.

The anti-wave protrusion 31 is fixedly arranged on the base plate 10. A plurality of anti-wave protrusions 31 are provided, and the plurality of anti-wave protrusions 31 are arranged at intervals. The anti-wave protrusions 31 are vertically arranged on the base plate 10, and the plurality of anti-wave protrusions 31 are uniformly arranged.

The anti-wave protrusion 31 specifically has a cylindrical structure, and generally speaking, a diameter of the anti-wave protrusion 31 should not be too large or too small, and a height of the anti-wave protrusion 31 should not be too low, otherwise the anti-wave effect will be reduced. The specific diameter and height of the anti-wave protrusion 31 of the cylindrical structure may be determined according to the actual situation. In the embodiment, the anti-wave protrusion 31 is preferably arranged at a corner of the fuel tank. By arranging the plurality of anti-wave protrusions 31, when the oil sloshes in a local area of the fuel tank, especially at the corner of the fuel tank, the oil may be dispersed, to decompose the force of the oil, having a good suppression effect on the sloshing of the oil.

Further, the anti-wave protrusion 31 is arranged on the upper side and/or the lower side of the base plate 10. In the embodiment, the upper side and the lower side of the second anti-wave part 30 of the base plate 10 are provided with the anti-wave protrusion 31, which may have a suppression effect on the oil flowing on the upper side and the lower side of the base plate 10.

In some other embodiments, the anti-wave protrusion 31 may be arranged only on the upper side of the base plate 10, or only on the lower side of the base plate 10.

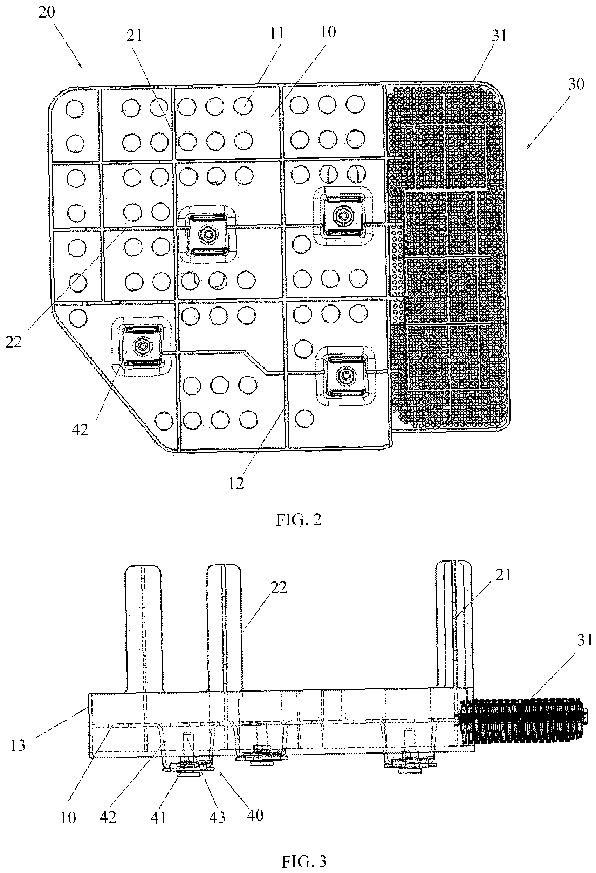

The fixing part includes a fixing device 40, and the fixing device 40 includes a fixing hole 41 defined in the base plate 10, as shown in FIGS. 2 and 3. The base plate 10 is provided with a recess 42 recessed downwards, the fixing hole 41 is defined in a bottom of the recess 42, and the inner wall of the fuel tank is welded with a fixing column 43 fitted with the fixing hole 41. The fixing column 43 is specifically a threaded column, and the threaded column passes through the fixing hole 41 and is tightened by a nut, thus achieving fixation of the base plate 10.

In the embodiment, the recess 42 is a square recess 42. In some other embodiments, the recess 42 may also be a circular recess 42 or other types. The recess 42 has a certain depth, so that after the base plate 10 is fixed to the inner wall of the fuel tank, a certain gap is defined between the base plate 10 and the inner wall of the fuel tank, and the base plate 10 may also play a certain anti-wave role. The specific depth of recess 42 may be determined according to actual needs.

According to the size of the base plate 10, a plurality of fixing devices 40 may be provided, and the plurality of fixing devices 40 are arranged at intervals to realize the stable fixation of the base plate 10.

In some embodiments, the fixing part further includes a snapping device, a snapping part is arranged on the inner wall of the fuel tank, the snapping part is specifically a metal support welded on the inner wall of the fuel tank, the base plate 10 is provided with a snap fitted with the metal support, and the snap is snap-fitted with the metal support. The base plate 10 is fixed on the inner wall of the fuel tank by snap-fit between the snap and the metal support.

According to the size of the base plate 10, a plurality of snapping devices may be provided, and the plurality of snapping devices are arranged at intervals to realize the stable fxiation of the base plate 10.

In some embodiments, the fixing device 40 is arranged in an area of the first anti-wave part 20 on the base plate 10, and the snapping device is arranged in an area of the second anti-wave part 30 on the base plate 10.

Only the fixing device 40 may be arranged on the base plate 10, or both the snapping device and the fixing device 40 are arranged on the base plate 10, which may be determined according to the size of the base plate 10. When the base plate 10 is set too large, the base plate 10 cannot be firmly fixed on the inner wall of the fuel tank solely by the fixing device 40, and then the fixing device 40 may fix the base plate 10 together with the snapping device.

In some other embodiments, the positions of the fixing device 40 and the snapping device may also be interchangeable, or both the fixing device 40 and the snapping device are arranged in the area of the first anti-wave part 20, or are arranged in the area of the second anti-wave part 30.

The present disclosure also provides a fuel tank, including a fuel tank anti-wave plate as described above, and the second anti-wave part 30 is arranged close to an inner wall of the fuel tank. By arranging the fuel tank anti-wave plate in the fuel tank, the sloshing of the oil in the fuel tank is suppressed, and a better suppression effect on the sloshing of the oil in the corner area of the fuel tank may be achieved, reducing the noise generated when the oil sloshes, and improving the passenger experience.

The present disclosure further provides a vehicle, including a fuel tank as described above. By arranging the fuel tank having the fuel tank anti-wave plate on the vehicle, the noise generated by the sloshing of the oil in the fuel tank of the vehicle during driving is reduced, thus improving the passenger experience.

It should be noted that in the present disclosure, relative terms such as "first" and "second" are only used to distinguish one entity or operation from another entity or operation, and do not necessarily require or imply any such actual relationship or order between these entities or operations. Furthermore, the term "include", "comprise" or any other variation thereof is intended to cover non-exclusive inclusions such that a process, method, article, or device comprising a series of elements includes not only those elements, but also other elements that are not expressly listed, or also includes elements inherent in such a process, method, article, or device. Without further limitation, an element defined by the phrase "comprising a ..." does not exclude the presence of additional identical elements in the process, method, article or device comprising the element.

The above description is only specific embodiments of the present disclosure, so that those skilled in the art may understand or implement the present disclosure. Various modifications to these embodiments will be apparent to those skilled in the art, and the general principles defined herein may be implemented in other embodiments without departing from the scope of the present disclosure. Therefore, the present disclosure will not be limited to the embodiments described herein, but is to be accorded the broadest scope consistent with the principles and novel features disclosed herein.

## Claims

1. A fuel tank anti-wave plate, comprising a base plate (10), wherein a first anti-wave part (20) and a second anti-wave part (30) are arranged on the base plate (10), the first anti-wave part (20) comprises a first anti-wave plate (21) and a second anti-wave plate (22), the first anti-wave plate (21) and the second anti-wave plate (22) are arranged in a crossed manner, the second anti-wave part (30) is arranged on a side of the first anti-wave part (20), and the second anti-wave part (30) comprises an anti-wave protrusion (31); and
the base plate (10) is further provided with a fixing part, and the fixing part fixes the base plate (10) in a fuel tank.

2. The fuel tank anti-wave plate according to claim 1, wherein the first anti-wave plate (21) and the second anti-wave plate (22) are arranged perpendicular to each other, and the first anti-wave plate (21) and the second anti-wave plate (22) are perpendicular to the base plate (10).

3. The fuel tank anti-wave plate according to claim 1 or 2, wherein a plurality of first anti-wave plates (21) and a plurality of second anti-wave plates (22) are provided, the plurality of first anti-wave plates (21) are parallel to each other, the plurality of second anti-wave plates (22) are parallel to each other, and the plurality of first anti-wave plates (21) and the plurality of second anti-wave plates (22) cross to enclose a plurality of rectangular spaces.

4. The fuel tank anti-wave plate according to claim 3, wherein the base plate (10) defines a first avoidance hole (11) configured for oil on an upper side and a lower side of the base plate (10) to communicate with each other, a plurality of first avoidance holes (11) are provided, and a bottom of each rectangular space defines at least one first avoidance hole (11).

5. The fuel tank anti-wave plate according to claim 3 or 4, wherein the first anti-wave plate (21) defines a second avoidance hole (23), a plurality of second avoidance holes (23) are provided, and each rectangular space defines at least one second avoidance hole (23).

6. The fuel tank anti-wave plate according to any one of claims 1 to 5, wherein the second anti-wave plate (22) defines a U-shaped groove (24) opening upwards, two sides of the U-shaped groove (24) are respectively coupled to the first anti-wave plate (21), and a bottom of the U-shaped groove (24) is coupled to the base plate (10).

7. The fuel tank anti-wave plate according to any one of claims 1 to 6, wherein a reinforcing plate (12) is further arranged on the base plate (10), and the reinforcing plate (12) is arranged in parallel with the first anti-wave plate (21) and penetrates the second anti-wave plate (22).

8. The fuel tank anti-wave plate according to claim 6, wherein a reinforcing plate (12) is further arranged on the base plate (10), the reinforcing plate (12) is arranged in parallel with the first anti-wave plate (21) and penetrates the second anti-wave plate (22), and a height of the reinforcing plate (12) is identical to a height of the U-shaped groove (24).

9. The fuel tank anti-wave plate according to any one of claims 1 to 8, wherein a baffle plate (13) is arranged at an edge of the first anti-wave part (20).

10. The fuel tank anti-wave plate according to any one of claims 1 to 9, wherein the anti-wave protrusion (31) is arranged on an upper side and/or a lower side of the base plate (10).

11. The fuel tank anti-wave plate according to any one of claims 1 to 10, wherein the fixing part comprises a fixing device (40) comprising a fixing hole (41) defined in the base plate (10), the base plate (10) defines a recess (42) recessed downwards, the fixing hole (41) is defined in a bottom of the recess (42), an inner wall of the fuel tank is welded with a fixing column (43) fitted with the fixing hole (41), and the fixing column (43) is a threaded column passing through the fixing hole (41).

12. The fuel tank anti-wave plate according to claim 11, wherein the recess (42) is recessed downwards, so that a gap is defined between the base plate (10) and the inner wall of the fuel tank after the base plate (10) is fixed to the inner wall of the fuel tank.

13. The fuel tank anti-wave plate according to any one of claims 1 to 12, wherein the fixing part further comprises a snapping device comprising a snap arranged on the base plate (10), and a snapping part fitted with the snap is arranged on the inner wall of the fuel tank.

14. A fuel tank, comprising a fuel tank anti-wave plate according to any one of claims 1 to 13, wherein the second anti-wave part (30) is arranged close to an inner wall of the fuel tank.

15. A vehicle, comprising a fuel tank according to claim 14.
